Europäisches Patentamt

European Patent Office

Office européen des brevets

(11) Publication number: **0 063 901**
A1

(12) **EUROPEAN PATENT APPLICATION**

(21) Application number: **82301956.7**

(22) Date of filing: **16.04.82**

(51) Int. Cl.³: **C 10 G 11/18, B 01 J 8/18**

(30) Priority: **24.04.81 US 257092**

(43) Date of publication of application: **03.11.82**
**Bulletin 82/44**

(84) Designated Contracting States: **AT BE DE FR GB IT NL**

(71) Applicant: **MOBIL OIL CORPORATION, 150 East 42nd Street, New York New York 10017 (US)**

(72) Inventor: **Schatz, Klaus Wilhelm, One Jockey Hollow Run, Swedesboro New Jersey (US)**

(74) Representative: **Cooper, John Anthony et al, Mobil Court 3 Clements Inn, London WC2A 2EB (GB)**

(54) **Fluid catalytic cracking process and apparatus.**

㊗ An acceleration zone (A) in the "Y" section of the riser (at the point of contact of regenerated catalyst and oil feed) in the FCC reactor increases initial superficial velocity of vaporized hydrocarbons to 7.6 to 24.4 m per second to reduce catalyst backmixing. The acceleration zone is followed by a transition zone (T) comprising an expanding riser section, which connects the acceleration zone to the remainder of the riser.

REGENERATED CATALYST

HYDROCARBON FEED

FLUID CATALYTIC CRACKING PROCESS AND APPARATUS

This invention relates to the fluid catalytic cracking (FCC) of petroleum fractions and more especially to an improved FCC riser reactor.

The conversion of various petroleum fractions into more valuable products in catalytic reactors is well known, and the petroleum industry has found the use of fluid bed catalytic cracking reactors particularly advantageous for that purpose. An FCC reactor typically comprises a thermally balanced assembly of apparatus units comprising the reactor vessel containing a catalyst and a regenerator vessel in which spent catalyst is regenerated. The petroleum fraction feed is converted in the reactor vessel over the catalyst and coke simultaneously forms on the catalyst, thereby deactivating it. The deactivated or spent catalyst is removed from the reactor vessel and conducted to the regenerator vessel in which coke is burned from the catalyst with air, thereby regenerating the catalyst. The regenerated catalyst is then recycled to the reactor vessel. The reactor-regenerator assembly must be maintained in steady state heat balance so that heat generated by the exothermic burning the coke provides sufficient thermal energy for the endothermic catalytic cracking in the reactor vessel. The steady state heat balance is usually achieved and maintained in FCC reactors by controlling the rate of flow of the regenerated catalyst from the regenerator to the reactor by means of an adjustable slide valve in the generator-to-reactor conduit.

The product stream of the catalytic cracker is usually fractionated into a series of products including: gas, normally conducted to a gas treatment plant; gasoline; light cycle gas oil; and heavy cycle gas oil. A portion of the heavy cycle gas oil is usually recycled into the reactor vessel and mixed with fresh feed. The bottom effluent of the fractionator is conventionally subjected to settling and the solid-rich portion of the settled product is also recycled to the reactor vessel in admixture with the heavy cycle gas oil and fresh feed.

In present-day FCC reactors, the regenerated catalyst is introduced into the base of a riser reactor column in the reactor vessel. A primary purpose of the riser reactor is to crack the petroleum feed. The regenerated hot catalyst is mixed in the bottom of the riser reactor with a stream of fresh feed and recycled petroleum fractions, and the mixture is forced upwardly through the riser reactor. During the upward passage of the mixed catalyst and petroleum fractions, the petroleum is cracked and coke is simultaneously deposited on the catalyst. The coked catalyst and the cracked petroleum components pass upwardly out of the riser and through a solid-gas separation system, for example a series of cyclones, at the top of the reactor vessel. The cracked petroleum fraction is conducted to product separation, while the coked catalyst, after steam stripping, passes into the regenerator vessel and is regenerated. Most of the cracking reactions in such modern FCC units take place in the riser reactor. Accordingly, the remainder of the reactor vessel is used primarily to separate entrained catalyst particles from the petroleum fractions.

Further details of FCC processes can be found in U.S. Patents 2,383,636, 2,689,210, 3,338,821, 3,812,029, 4,093,537, 4,118,337, 4,118,338 and 4,218,306 as well as in Venuto et al, "Fluid Catalytic Cracking With Zeolite Catalysts", Marcel Dekher, Inc. (1979).

Performance characteristics of FCC reactors can be measured by a number of factors, for example percent conversion (usually in volume percent) of feed to all of the products of the FCC reactor, such as gasoline, coke and gas; selectivity, which is a measure (also usually in percent volume) of the conversion of feed to gasoline-grade products; and octane number of product gasoline. While the degree of conversion usually increases with increasing reactor riser temperature, the reactor riser top temperature is limited to about 566°C by downstream process considerations, metallurgical restraints and the desired product distribution.  In addition, at excessively high riser reactor temperatures the feed undergoes overcracking which manifests itself as a steady production of excessive amounts of light gases at the expense of gasoline.

With conventional riser reactors, a great deal of backmixing of catalyst takes place in the riser, especially in the initial portion of the riser where freshly regenerated catalyst is introduced.  The backmixing results in non-selective cracking of feed to produce excess coke and light gases at the expense of gasoline-grade products.  The loss of selectivity is apparently caused by the relatively long contact time between catalyst and feed due to catalyst backmixing.  It is also thought that the increased contact time is responsible for the excessive effect of metals poisoning on catalyst performance, as evidenced by increased dry gas and coke production.  Metals, such as nickel and vanadium present in the hydrocarbon feed, deposit on the catalyst during contact with the feed.  Although coke is removed from the spent catalyst in the regenerator by burning, the metals are not, and the elimination or reduction of the metals content of the poisoned catalyst requires a continuous additon of fresh catalyst or a separate purification procedure.

The present invention is based on the observation that catalyst backmixing in the reactor riser can be substantially reduced, with consequential reduction of metal-poisoning of the catalyst and increase in conversion and product selectivity, by providing an acceleration zone in the lower portion of the reactor riser where the regenerated catalyst first contacts the hydrocarbon feed.

The present invention therefore provides a fluid catalytic cracking process which comprises mixing a hydrocarbon feed with a regenerated catalyst in the bottom section of a reactor riser, passing the mixture of hydrocarbon feed and catalyst through the riser to effect cracking of the hydrocarbon feed at the process temperature under endothermic process conditions and deactivate the catalyst by deposition of carbonaceous deposits thereon, separating
the deactivated catalyst from the cracked hydrocarbon feed, passing
the deactivated catalyst to a regenerator vessel in which the
carbonaceous deposits are removed from the deactivated catalyst
under exothermic process conditions by means of a regenerating
medium introduced into the regenerator vessel, and passing the
regenerated hot catalyst to the bottom section of the reactor riser,
characterized in that the mixture of hydrocarbon feed and catalyst
initially passes in the reactor riser through an acceleration zone
constituting the first 6.1 to 7.6 m of the reactor riser length, the
vaporized hydrocarbon feed being accelerated therein to a
superficial velocity of from 7.6 to 24.4 m per second.

The present invention also provides a fluid catalyst
cracking apparatus comprising in combination a reactor vessel and a
regenerator vessel, the reactor vessel comprising a reactor riser
and a gas-solid separator, means for conveying a deactivated
catalyst from the reactor vessel to the regenerator vessel, and
means for conveying regenerated catalyst from the regenerator vessel
to the reactor vessel, characterized in that the first 6.1 to 7.6 m
of the reactor riser length is an acceleration zone having a
cross-sectional area such that, in use a hydrocarbon feed is
accelerated therein to a superficial velocity of from 7.6 to 24.4 m
per second.

In accordance with the present invention, a conventional
FCC riser reactor is provided with an acceleration zone in the first
6.1 to 7.6 m of the riser reactor length in which the regenerated
catalyst is accelerated by a vaporized hydrocarbon feed having
superficial velocity of from 7.6 to 24.4 m per second. A transition
zone connects the acceleration zone with the remainder of the
riser. The transition zone is a continuously expanding,
frusto-conical portion of the riser which, for hydrodynamic reasons,
flares out at an angle of not more than 9 degrees. The acceleration
zone in the riser reactor increases conversion and selectivity of
the FCC reactor, decreases sensitivity of the catalyst to metals contamination and decreases regenerator temperature, thereby enabling the FCC reactor to operate at substantially higher riser top temperature conditions.

The acceleration zone is provided in the reactor riser by manufacturing the initial portion of the riser from a conduit of a reduced cross-sectional area as compared to the remainder of the riser for a particular installation. The acceleration zone begins at the riser bottom, where the regenerated catalyst initially contacts the hydrocarbon feed. The length of the acceleration zone is such that the vaporized hydrocarbon feed is accelerated therein to a superficial velocity of 7.6 to 24.4 m per second, preferably 7.6 to 15.25 m per second and more preferably 9.1 to 12.2 m per second. The length which is required to achieve that velocity is 6.1 to 7.6 m in an industrial size riser reactor of 24.4 to 61 m length and cross-sectional area of 0.28 to 2.79 $m^2$. It will be clear that the acceleration zone in the initial portion of the riser can be provided by constructing the riser in any convenient manner, as long as the superficial velocity of the feed in the acceleration zone falls within the specified limits of 7.6 to 24.4 m per second. In contrast, initial superficial velocity of hydrocarbon vapors in known risers usually ranges from about 3.65 to about 6.1 m per second.

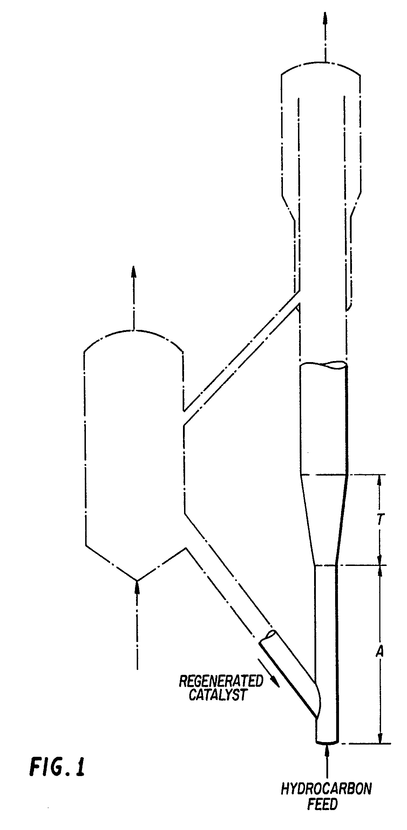

Referring by way of example only to Figure 1 of the accompanying drawings, which shows schematically the 'Y' section of a FCC riser reactor, regenerated catalyst is fed to the bottom of an acceleration zone A. A transition zone T follows the acceleration zone and it connects the acceleration zone with the remainder of the riser. As shown in Figure 1, the transition zone comprises a section of the riser reactor above the acceleration zone and has a gradually and constantly increasing cross-sectional area. The expanding cross-sectional area is required to connect the acceleration zone to the larger cross-sectional area of the riser reactor above which the volume of hydrocarbon vapors is constantly increasing by virtue of the cracking of the feed hydrocarbons. The degree of cross-sectional area increase of the riser in the transition zone is such that catalyst velocity therein does not exceed the velocity of the oil vapors; otherwise, catalyst velocity may be decreased thereby partially or completely defeating the effect and purpose of the acceleration zone. In a riser having a substantially circular cross-section, the walls of the transition zone are inclined at not more than 9 degrees, preferably at 5 to 9 degrees. The maximum angle of 9 degrees is a well-known hydrodynamic limit above which undesirable gas eddies occur in the boundary layer. Accordingly, the length of the transition zone is defined by the difference between the diameter of the acceleration zone and the diameter of the riser above the transition zone. The transition zone usually extends for a length of 1.5 to 3.1 m.

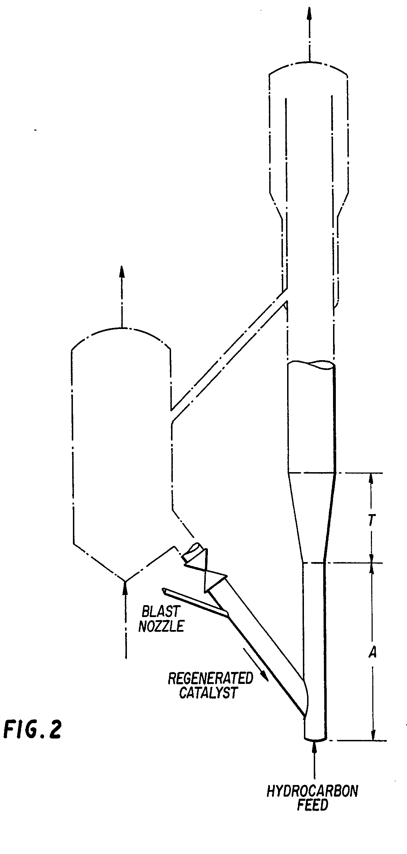

The provision of the acceleration zone in the riser may necessitate some modifications to the other branch of the mixing "Y", i.e., the regenerator-to-reactor standpipe. Such modifications are limited to decreasing the cross-sectional area of that conduit to that of the acceleration zone. It will be apparent that the decrease in the cross-sectional area is necessary only because of undue mechanical stresses on the welds of the conduit. In addition, under certain circumstances, it may also be necessary to inject additional dispersion gas into the standpipe or into the riser bottom to facilitate steady flow of the catalyst and to prevent bridging thereof in the standpipe. Such additional dispersion gas may be introduced, for example through a dispersion gas nozzle (blast nozzle) placed downstream of the existing slide valve in the regenerator-to-reactor standpipe as shown schematically in Figure 2 of the accompanying drawings. A conventional fluidizing gas, for example light hydrocarbons or steam, can be used in this nozzle, as well as in any other fluidization nozzles in the riser. Exact flow rates of the dispersion gas through such a nozzle will depend on the catalyst used and the feed in a particular installation and on other operating conditions of the process, such as feed rate and circulation rate of the catalyst, and they can be easily calculated in a conventional manner. Generally, the amount of the additional
dispersion gas will be about 0.3 to 0.5 % of the weight of fresh
feed introduced into the riser.

After leaving the acceleration and the transition zones,
the mixture of cracked feed and the catalyst passes into the upper
portion of the riser and into the separation means in the reactor
vessel, as in a conventional reactor. With the acceleration zone of
the present invention, vaporized hydrocarbons reach higher velocity
earlier in the process but final velocity of hydrocarbons is the
same as in known FCC reactor risers. Accordingly, the operating
procedure and hardware of the reactor need not be altered, other
than as discussed above.

The acceleration zone reduces catalytic coke make by about
0.5-0.6% by weight; increases conversion by about 3-5% by volume;
increases gasoline yield by about 2-5% by volume; reduces the amount
of light cycle oil produced by about 0.9-4% by volume; and, reduces
the amount of light hydrocarbon gases (alkanes and alkenes of 2 to 4
carbon atoms) by about 0.4-5% by volume. An additional benefit of
the acceleration zone is a significant reduction in the regenerator
operating temperature (20-46°C decrease) due to reduced coke make.
Such a significant temperature reduction enables the top operating
temperature of the riser to be significantly increased without
exceeding the maximum allowable temperature in the regenerator.
Increased riser top temperature, of course, increases conversion of
hydrocarbons.

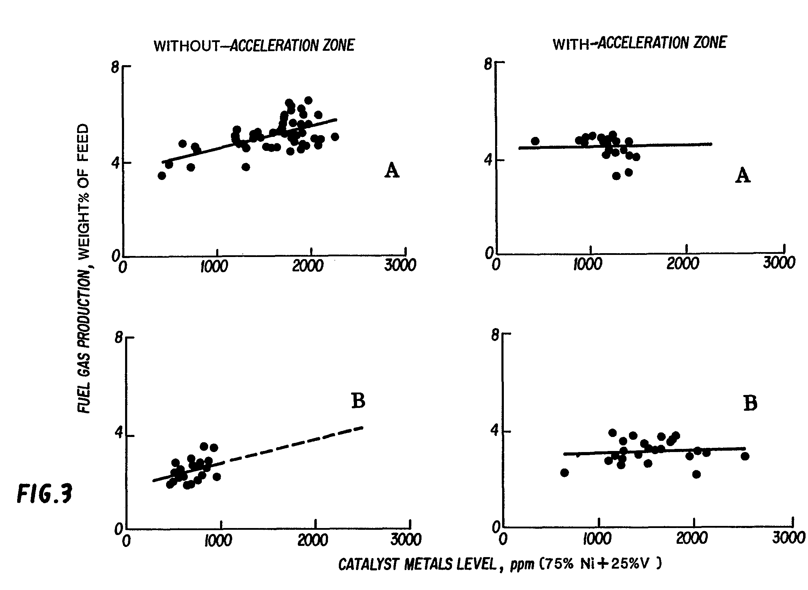

Another significant benefit of the acceleration zone is the
reduced sensitivity of catalyst to metals poisoning. As illustrated
in Figure 3 of the accompanying drawings, in an FCC reactor A (a UOP
straight riser unit of 1.83 m riser diameter, fully disclosed in
HYDROCARBON PROCESSING, Volume 51, Number 5, page 89 [May 1972]) in
one instance, at 20000 ppm metals (1500 ppm Ni and 500 ppm V)
contamination, the production of fuel gas decreased from about 6
weight % of feed (with no acceleration zone) to about 4.5 weight %
of feed (after the installation of the acceleration zone). Reactor B was a stacked unit having a riser diameter of 0.61 m, described in the same literature reference.

The acceleration zone and transition zone can be used with any known FCC riser reactor, and no attempt has therefore been made to exemplify any particular FCC installation, since such units are well known in the art.

The following Example illustrates the invention.

## EXAMPLE

A conventional FCC riser reactor (a UOP stacked unit of the construction disclosed in HYDROCARBON PROCESSING, Volume 51, Number 5, page 89 [May 1972]) was modified by incorporating an acceleration zone according to the invention. The length of the riser was 39.6 m and it had a bottom diameter of 0.76 m and a top diameter of 0.91 m before the modification. Before the modification, initial superficial velocity of hydrocarbon vapors was 4.88 m/second.

The modification involved inserting a 6.1 m long acceleration section in the riser having an inside diameter of 0.53 m. This was followed by a transition section 1.22 m long, whose walls flared out at an enclosed angle of 9 degrees. Both sections were of a conventional construction.

After the modification, initial superficial velocity of vaporized hydrocarbons in the acceleration section was 9.94 m/sec. Operating data was obtained for the unit before and after modification and it is presented in Table 1. Feedstock properties are summarized in Table 2.

| Run No. | Without Acceleration Zone | | With Acceleration Zone | | | | | | | |
|---|---|---|---|---|---|---|---|---|---|---|
| | 1 | | 2 | | 3 | | 4 | | 5 | |
| **Operating Conditions** | | | | | | | | | | |
| Fresh Feed Rate, m$^3$/day | 2146 | | 2894 | | 1682 | | 1682 | | 2892 | |
| Combined Feed Rate, m$^3$/day | 2237 | | 3006 | | 1795 | | 1798 | | 3002 | |
| Combined Feed Ratio, wt | 1.05 | | 1.04 | | 1.07 | | 1.07 | | 1.04 | |
| Combined Feed Ratio, vol | 1.04 | | 1.04 | | 1.07 | | 1.07 | | 1.04 | |
| Riser Top Temp., °C | 507 | | 510 | | 509 | | 509 | | 509 | |
| Combined Feed Temp., °C | 348 | | 384 | | 377 | | 382 | | 390 | |
| Regenerated Catalyst Temp., °C | 712 | | 650 | | 633 | | 654 | | 673 | |
| Catalyst-to-Oil Ratio, wt/wt | 4.06 | | 4.64 | | 6.01 | | 3.96 | | 3.92 | |
| Combustion Air Rate, m$^3$/min | 717 | | 784 | | 611 | | 533 | | 734 | |
| Coke Burned, kg/hr | 3093 | | 3424 | | 2380 | | 2111 | | 3500 | |
| Carbon on Spent Catalyst, wt% | 0.84 | | 0.63 | | 0.67 | | 0.73 | | 0.72 | |
| Carbon on Regen. Catalyst, wt% | 0.02 | | 0.08 | | 0.07 | | 0.06 | | 0.05 | |
| Stripping Steam Rate, kg/hr | 1116 | | 1270 | | 1281 | | 1274 | | 1278 | |
| **Yields, % Fresh Feed** | **Wt.** | **Vol.** | **Wt.** | **Vol.** | **Wt.** | **Vol.** | **Wt.** | **Vol.** | **Wt.** | **Vol.** |
| Conversion, 196°C at 90% | 67.6 | 69.8 | 65.7 | 68.2 | 80.7 | 82.7 | 67.0 | 69.0 | 56.8 | 58.0 |
| Heavy Fuel Oil | 11.3 | 10.0 | 12.9 | 11.3 | 5.8 | 4.7 | 12.8 | 11.4 | 18.7 | 17.7 |
| Light Fuel Oil, 343°C at 90% | 21.1 | 20.2 | 21.4 | 20.5 | 13.5 | 12.5 | 20.2 | 19.6 | 24.6 | 24.4 |
| C$_5$$^+$ Gasoline, 196°C at 90% | 48.2 | 58.1 | 48.8 | 57.6 | 58.2 | 68.4 | 49.0 | 59.2 | 41.4 | 49.9 |
| Total C$_4$'s | 8.3 | 12.8 | 7.3 | 11.0 | 11.1 | 16.5 | 7.8 | 11.9 | 6.0 | 9.3 |
| Total C$_3$'s | 4.4 | 7.8 | 4.0 | 6.8 | 5.3 | 9.0 | 4.1 | 7.4 | 3.6 | 6.4 |
| Dry Gas + H$_2$S | 2.9 | | 2.4 | | 2.2 | | 2.8 | | 2.5 | |
| Coke | 3.8 | | 3.2 | | 3.9 | | 3.3 | | 3.2 | |
| Total | 100.0 | 108.9 | 100.0 | 107.2 | 100.0 | 111.1 | 100.0 | 109.5 | 100.0 | 107.7 |

F-0998-L

-9-

0063901

## TABLE 2
### FEEDSTOCK PROPERTIES FOR FCC REACTOR EFFLUENT SURVEYS

| Run No. | Without Acceleration Zone | | | With Acceleration Zone | | |
|---|---|---|---|---|---|---|
| | 1 | | | 2 | | |
| | 343°C- | 343°C+ | Total | 343°C- | 343°C+ | Total |
| Yield, % wt | 9.85 | 90.15 | 100.0 | 5.62 | 94.38 | 100.00 |
| **Physical Properties** | | | | | | |
| Gravity, °API | 23.0 | 22.8 | 23.8 | | | 28.0 |
| Spec. Gravity at 15.6°C | 0.8843 | | 0.9107 | 0.8647 | 0.8849 | 0.8886 |
| Aniline Point, °C | | | 83.7 | | | 93.1 |
| Sulfur, %wt | 0.63 | 0.80 | 0.78 | 0.56 | 0.64 | 0.63 |
| Total Nitrogen, %wt | | | 0.070 | | | 0.048 |
| Bromine Number | | | 2.6 | | | 1.9 |
| Hydrogen Content, %wt | | | .12.32 | | | 13.21 |
| Pour Point, °C | | | 37.8 | | | 37.8 |
| Molecular Weight | 257 | 386 | 412 | 229 | 366 | 373 |
| Conradson Carbon Residue, %wt | | | 0.14 | | | 0.16 |
| **Metals, ppm** | | | | | | |
| Nickel | | | 0.1 | | | < 0.02 |
| Vanadium | | | 0.2 | | | 0.1 |
| Copper | | | 0.1 | | | < 0.01 |
| Iron | | | 1.2 | | | 0.2 |
| **Distillation, °C** | | | | | | |
| IBP | | | 271 | | | 274 |
| 5 % vol | | | 315 | | | 330 |
| 10 % vol | | | 659 | | | 357 |
| 20 % vol | | | 722 | | | 380 |
| 30 % vol | | | 756 | | | 394 |
| 40 % vol | | | 782 | | | 407 |
| 50 % vol | | | 804 | | | 417 |
| 60 % vol | | | 824 | | | 428 |
| 70 % vol | | | 842 | | | 437 |
| 80 % vol | | | 865 | | | 451 |
| 90 % vol | | | 896 | | | 466 |
| 95 % vol | | | 914 | | | 478 |

TABLE 2 (cont.)
FEEDSTOCK PROPERTIES FOR FCC REACTOR EFFLUENT SURVEYS

| Run No. | With Acceleration Zonce | | | | | |
| --- | --- | --- | --- | --- | --- | --- |
| | 3 | | | 5* | | |
| | 343°C- | 343°C+ | Total | 343°C- | 343°C+ | Total |
| Yield, % wt | 6.42 | 93.58 | 100.00 | 3.70 | 96.30 | 100.0 |
| **Physical Properties** | | | | | | |
| Gravity, °API | | | 29.1 | | | |
| Spec. Gravity at 15.6°C | 0.8639 | 0.8783 | 0.8770 | 0.8788 | 0.9183 | 0.9172 |
| Aniline Point, °C | | | 94.3 | | | 82.9 |
| Sulfur, %wt | 0.47 | 0.41 | 0.45 | 0.78 | 0.96 | 0.99 |
| Total Nitrogen, %wt | | | 0.047 | | | 0.076 |
| Bromine Number | | | 1.7 | | | 3.3 |
| Hydrogen Content, %wt | | | 13.10 | | | 12.40 |
| Pour Point, °C | | | 37.8 | | | 37.8 |
| Molecular Weight | 228 | 357 | 367 | 228 | 381 | 391 |
| Conradson Carbon Residue, %wt | | | 0.13 | | | 0.49 |
| **Metals, ppm** | | | | | | |
| Nickel | | | <0.01 | | | 0.5 |
| Vanadium | | | 0.1 | | | 0.5 |
| Copper | | | 0.05 | | | <0.03 |
| Iron | | | 0.4 | | | 0.5 |
| **Distillation, °C** | | | | | | |
| IBP | | | 283 | | | 274 |
| 5 % vol | | | 339 | | | 345 |
| 10 % vol | | | 361 | | | 366 |
| 20 % vol | | | 379 | | | 391 |
| 30 % vol | | | 391 | | | 403 |
| 40 % vol | | | 403 | | | 414 |
| 50 % vol | | | 416 | | | 425 |
| 60 % vol | | | 425 | | | 441 |
| 70 % vol | | | 437 | | | 456 |
| 80 % vol | | | 451 | | | 473 |
| 90 % vol | | | 474 | | | 496 |
| 95 % vol | | | 490 | | | 517 |

*The feed in Run 4 was similar to that in Run 5.

As can be seen from these tabulations, other changes in the unit operation (most noticeably catalyst activity, fresh feed rate and feed composition) make a direct comparison of survey results impossible. A computerized FCC model was therefore used to normalize the data for differences in catalyst, feedstocks, and operating conditions. To accomplish this normalization the computer program unit factors were determined for all survey data by matching actual yields at riser conditions to computerized model yields. Thus, differences in unit factors, before and after the modification, represent the effect of the acceleration zone on FCC performance. Using the resulting two sets of unit factors, the computer program was run to simulate the operation with and without the acceleration zone. Detailed yields are presented in Table 3 for operating at constant coke yield. The oil-to-riser temperature for the simulation with the acceleration zone was increased to provide an operation at the same coke yield as the simulation without the acceleration zone.

During the time between the two sets of surveys, the catalyst used in the FCC unit was changed from Crosfield's CCZ-220 (promoted Super-D) to Filtrol's FOC-90. Filtrol claims that FOC-90 produces higher octane gasoline than conventional FCC catalysts such as Super-D.

In order to determine if any of the observed differences in yield or octane could be attributed to the catalyst change, separate riser pilot unit runs were made with the two catalysts with operating conditions and feedstock of Run 5. Both catalysts had identical gasoline and coke selectivities with the FOC-90 giving the expected 1.0 R+O higher gasoline octane. Other pilot studies on FOC-90 and Super-D are in agreement with these results.

Thus, the selectivity improvements observed on this FCC unit are the results of the riser acceleration zone. On the other hand, the one number increase in octane observed on a similar feedstock after the modification is attributed to the use of FOC-90 catalyst. Therefore, no significant gasoline octane shift resulted from the installation of the riser acceleration zone, even though the gasoline selectivity is much higher.

TABLE 3
SIMULATED EFFECT OF RISER ACCELERATION ZONE
ON FCC PERFORMANCE BASED
ON COMPUTER NORMALIZATION

|  | Operation Without Acceleration Zone | Operation With Acceleration Zone |
|---|---|---|
| **Reactor Conditions:** | | |
| Riser Top Temp. °C | 507 | 507 |
| Cat-to-Oil | 4.0 | 4.5 |
| Oil-to-Riser Temp. °C | 349 | 377 |
| Combined Feed Ratio | 1.05 | 1.05 |
| Fresh Feed Rate $m^3$/day | 2148 | 2148 |
| Combined Feed Rate $m^3$/day | 2245 | 2245 |
| Riser Top Pressure kPa | 278 | 277 |
| Stripping Steam kg/tonne cat. | 3.25 | 3.25 |
| Cat. Activity (FAI) | 64.1 | 64.1 |
| Standard Coke Producing Factor | 0.414 | 0.414 |
| Ni Equiv. on Cat. ppm | 588 | 588 |
| **Regenerator Conditions:** | | |
| Regenerator Temp. °C | 712 | 675 |
| Carbon on Spent Cat. % wt | 0.84 | 0.68 |
| Carbon on Regen. Cat. %wt | 0.02 | 0.02 |
| Combustion Air $m^3$/min | 759 | 748 |
| Combustion Air Temp. °C | 185 | 185 |
| Coke Burned kg/hr | 3110 | 3064 |
| **Computer Program Tuning Factors:** | | |
| Unit Factor | 1.191 | 1.191 |
| Coke Factor | 1.075 | 0.920 |
| Gasoline | 2.289 | 0.300 |
| **Product Cut Points:** | | |
| Light Cycle Oil, °C at 90% | 343 | 343 |
| $C_5^+$ Gasoline, °C at 90% | 196 | 196 |
| **Conversion, % vol** | 69.8 | 71.6 |

| Yields, % FCC Fresh Feed | Wt. % | Vol. % | API | Wt. % | Vol. % | API |
|---|---|---|---|---|---|---|
| Main Column Bottoms | 9.7 | 8.6 | 6.4 | 8.7 | 7.7 | 5.0 |
| Light Cycle Oil | 22.4 | 21.6 | 18.3 | 21.5 | 20.7 | 17.9 |
| $C_5^+$ Gasoline | 48.5 | 58.0 | 54.4 | 51.6 | 61.9 | 54.7 |
| Total $C_4$'s | 8.5 | 13.2 | | 8.0 | 12.4 | |
| Total $C_3$'s | 4.9 | 8.7 | | 4.3 | 7.5 | |
| $C_2$ and Lighter | 2.2 | | | 2.1 | | |
| Coke | 3.8 | | | 3.8 | | |
| Total | 100.0 | 110.1 | | 100.0 | 110.2 | |

Improvements in operating and product yield characteristics of FCC reactor with the acceleration zone are summarized and compared below, in Table 4, with the theoretically predicted benefits at constant coke make.

TABLE 4

| | Shifts Attributable to the Acceleration Zone | |
|---|---|---|
| | Predicted Benefits | Actual Benefits |
| Conversion, vol. % | +2.1 | +1.8 |
| Gasoline, vol. % | +3.2 | +3.9 |
| Lt. Cycle Oil, vol. % | -1.1 | -0.9 |
| Clarified Slurry Oil, vol. % | -1.0 | -0.9 |
| $C_3$'s and $C_4$'s, vol. % | -1.0 | -2.0 |
| $C_2$ and Lighter, wt. % | +0.2 | -0.1 |
| Coke, wt. % | 0 | 0 |
| Gasoline Octane, R+O | -0.2 | 0 |
| Regenerator Temperature, °C | +1.1 | -36.7 |

As can be seen from the above data, the riser acceleration zone has given a significant improvement in cracking selectivity, providing both higher conversion and gasoline yield at the same coke yield and lower gas make. Furthermore, this higher gasoline selectivity was obtained with no loss in gasoline octane. In light of the reduced gas make, it is possible to increase the octane potential of the unit by raising riser top temperature. This shift in operation conditions coupled with the riser acceleration zone allows an existing FCC unit to produce substantially more gasoline at higher octane than is currently possible.

An unexpected benefit of the riser acceleration zone is the major reduction in regenerator temperature. This could be significant to units that are operating at relatively high regenerator temperatures.

It will be apparent that the above example can be successfully repeated with hydrocarbon feeds equivalent to those generically or specifically set forth above and under variable process conditions.

CLAIMS:

1. A fluid catalytic cracking process which comprises mixing a hydrocarbon feed with a regenerated catalyst in the bottom section of a reactor riser, passing the mixture of hydrocarbon feed and catalyst through the riser to effect cracking of the hydrocarbon feed at the process temperature under endothermic process conditions and deactivate the catalyst by deposition of carbonaceous deposits thereon, separating the deactivated catalyst from the cracked hydrocarbon feed, passing the deactivated catalyst to a regenerator vessel in which the carbonaceous deposits are removed from the deactivated catalyst under exothermic process conditions by means of a regenerating medium introduced into the regenerator vessel, and passing the regenerated hot catalyst to the bottom section of the reactor riser, characterized in that the mixture of hydrocarbon feed and catalyst initially passes in the reactor riser through an acceleration zone constituting the first 6.1 to 7.6 m of the reactor riser length, the vaporized hydrocarbon feed being accelerated therein to a superficial velocity of from 7.6 to 24.4 m per second.

2. A process according to claim 1 wherein, after passing through the acceleration zone, the mixture passes through a transition zone in the riser, the transition zone having a progressively larger diameter than the acceleration zone, the diameter increasing at an angle of not more than 9 degrees, the transition zone connecting the acceleration zone with the remainder of the riser, the linear velocity of the catalyst in the transition zone thereby not exceeding the linear velocity of the hydrocarbon vapors.

3. A process according to claim 2, wherein the expansion angle of the portion of the riser forming the transition zone is 5 to 9 degrees.

4.  A process according to any one of claims 1 to 3, wherein the superficial velocity of the vaporized hydrocarbon feed in the acceleration zone is 7.6 to 15.25 m per second.

5.  A fluid catalytic cracking apparatus comprising in combination a reactor vessel and a regenerator vessel, the reactor vessel comprising a reactor riser and a gas-solid separator, means for conveying a deactivated catalyst from the reactor vessel to the regenerator vessel, and means for conveying regenerated catalyst from the regenerator vessel to the reactor vessel, characterized in that the first 6.1 to 7.6 m of the reactor riser length is an acceleration zone having a cross-sectional area such that, in use a hydrocarbon feed is accelerated therein to a superficial velocity of from 7.6 to 24.4 m per second.

6.  Apparatus according to claim 5, wherein the acceleration zone is followed by a transition zone having a progressively larger diameter than the acceleration zone, the diameter increasing at an angle of not more than 9 degrees.

7.  Apparatus according to claim 6 wherein the angle of increase of the diameter of the transition zone is 5 to 9 degrees.

6013N

FIG. 1

REGENERATED
CATALYST

HYDROCARBON
FEED

T

A

FIG.2

BLAST
NOZZLE

REGENERATED
CATALYST

HYDROCARBON
FEED

T

A

WITHOUT–ACCELERATION ZONE

WITH–ACCELERATION ZONE

FUEL GAS PRODUCTION, WEIGHT% OF FEED

CATALYST METALS LEVEL, ppm (75% Ni + 25%V )

FIG.3

0063901

European Patent
Office

**EUROPEAN SEARCH REPORT**

0063901
Application number

EP 82 30 1956

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | US-A-3 123 547 (PALMER et al.) <br><br> * figures 1 and 2; claims 1-8 * <br><br> --- | 1,2,4-6 | C 10 G 11/18 <br> B 01 J 8/18 |
| Y | GB-A-2 001 545 (ICI) <br><br> * figure * <br><br> --- | 1,2,4-6 | |
| A | US-A-3 785 782 (CARTMELL) <br><br> * fdigure * <br><br> ----- | | |

**TECHNICAL FIELDS SEARCHED (Int. Cl. 3)**

C 10 G
B 01 J

The present search report has been drawn up for all claims

| Place of search | Date of completion of the search | Examiner |
|---|---|---|
| THE HAGUE | 13-07-1982 | MICHIELS P. |